# EUROPÄISCHE PATENTSCHRIFT

(11) **EP 1 652 261 B1**
(45) Veröffentlichungstag und Bekanntmachung des Hinweises auf die Patenterteilung: **15.01.2014**
(21) Anmeldenummer: 03772294.9
(22) Anmeldetag: 03.11.2003
(51) Int. Cl.: H01M 10/05, H01M 4/62, H01M 4/04, H01M 10/0565, H01M 10/0525, H01M 4/13, H01M 4/139, H01M 4/1391, H01M 4/1399, H01M 4/1393

(54) **LITHIUM-POLYMER-ENERGIESPEICHER UND VERFAHREN ZU IHRER HERSTELLUNG**
LITHIUM-POLYMER ENERGY STORE AND METHOD FOR PRODUCTION THEREOF
ACCUMULATEUR D'ENERGIE LITHIUM-POLYMERE ET SON PROCEDE DE PRODUCTION

(30) Priorität: 04.11.2002 DE 10251238
(43) Veröffentlichungstag der Anmeldung: 03.05.2006
(73) Patentinhaber: Dilo Trading AG, 6300 Zug (CH)
(72) Erfinder: NAARMANN, Herbert, 67227 Frankenthal (DE); KRUGER, Franz, Josef, 65817 Eppenstein (DE)
(74) Vertreter: TBK
(86) Internationale Anmeldenummer: PCT/EP2003/012241
(87) Internationale Veröffentlichungsnummer: WO 2004/042858

(56) Entgegenhaltungen:
- WO-A-00/51806
- DE-A- 10 118 639
- DE-A- 19 713 072
- US-A- 5 540 741

## Beschreibung

Die Erfindung bezieht sich auf ein Verfahren zur Herstellung von Lithium-Polymer-Energiespeichern durch ein neues Extrusionsverfahren und so hergestellte Lithium-Polymer-Energiespeicher.

Lithium-Polymer-Energiespeicher sind Li-Polymer-Batterien, die nach einem speziellen Verfahren und neuen Konzepten sowie mit neuen Komponenten hergestellt werden. Lithium-Polymer Batterien bestehen aus Anode, Kathode und einem Polymerelektrolyten als Separator.

Anode, Kathode und Separator werden zusammengeführt, so daß ein Verbund entsteht, bei dem der Separator als Zwischenlage für Anode/Kathode dient. Der erhaltene Verbund wird dann zu Mehrfachlagen verarbeitet und zu prismatischen bzw. Wickelzellen verarbeitet. Nach dem Einhausen und Polen liegt eine Lithium-Polymer Batterie vor, die nach dem Formieren betriebsbereit ist mit Spannung von ca. 4 Volt und Zyklenzeiten > 300.

Einzelheiten zur Herstellung und zum System sind literaturbekannt und dem "Handbook of Battery Materials" edit. I.0. Besenhard, Verlag VCH, Weinheim, 1999, zu entnehmen (Dokument 1). Spezielle Herstellungsverfahren, wie z. B. den sog. Bellcore-Prozeß sind beschrieben in "Lithium Ion Batteries" edit M. Wakihara et O. Yamamoto, Verlag VCH, Weinheim 1998 S. 235 u. Fig. 10.9 (Dokument 2).

Zur Herstellung der Lithium-Polymer Batterie werden grundsätzlich verschiedene Prozesse verwendet. Eine Variante ist der Beschichtungsprozeß, bei dem (die) der für die Kathoden- bzw. Anodenmasse erforderliche Polymerbinder gelöst wird (z. B. ca. 5-10%ig Fluorelastomere Homo oder Copolymere in z. B. N-Methyl-Pyrrolidon (NMP) und diese Polymerlösung mit den kathoden- bzw. anodenspezifischen Zusätzen wie Li-interkalierbare Metalloxide bzw. Liinterkalierbare Kohlenstoffe (Ruß, Graphit o.ä.) versetzt und dispergiert wird und dann diese Dispersion entsprechend der Filmbeschichtungstechnik auf Stromkollektoren (Folien, Bändern, Netzen o.ä. - Cu vorzugsweise für die Anode, Al vorzugsweise für die Kathode) aufgetragen wird.

Eine Variante (1a) der oben beschriebenen Beschichtungstechnik besteht in der Verwendung von wässrigen Polymerdispersionen anstelle der Polymerlösungen mit organischen Lösungsmitteln. Die nach 1 bzw. 1a erhaltenen Beschichtungen werden nach dem Trocknen (gewickelt) zu prismatischen oder Wickelzellen verarbeitet, wobei als Zwischenlage ein sog. Separator z. B. aus Cellgard o.ä. mit porösen Strukturen verwendet wird, ein derart hergestelltes System wird verkapselt und vor dem Verschließen mit (Elektrolyt) Leitsalzlösung (d. h. Leitsalz gelöst in aprotischen Lösungsmitteln) gefüllt. (z. B. durch Anlegen von Vakuum).

Der Bellcore-Prozeß (1 b) ist eine weitere Variante der Beschichtungstechnik, hier wurde schon in die Anoden- bzw. Kathodenmasse eine Komponente (Dibutylphthalat DBP z.B.) mit eingearbeitet, die vor der Zusammenführung von Anode/Kathode/Separator im sog. Bellcore-Prozeß (vgl. Dokument 2) herausgelöst wird, um ausreichende Porosität d. h. Aufnahmevermögen für die Leitsalzlösung (Elektrolyt) zu schaffen.

Ein grundsätzlich anderer Prozeß (2) ist die Extrusion z. B. vom Separator (Polymer-Gelelektrolyt) und z. B. einer Kathode (US-Patent 4,818,643; entspricht EP 0 145 498 B1 und DE 3485832T) bzw. die Extrusion von Anode, Separator und Kathode in parallel geschalteten Extrudern und nachfolgendem Zusammenführen (DE 100 20 031 A1). Die letztere Patentanmeldung offenbart ein Verfahren, in dem jeweils trägerlösungsmittelfreie Anodenmasse, Separator (Polymer-Gel-Elektrolyt) und Kathodenmasse in parallel geschalteten Extrudern extrudiert und anschließend als eine Einheit zusammengeführt werden, die mit Kollektorfolien laminiert wird.

Die bislang beschriebenen Verfahren haben allesamt, wenn auch unterschiedliche Nachteile: Bei den Beschichtungsprozessen (1 - 1a) muß in allen Fällen das organische Lösungsmittel bzw. das Wasser (eingeschleppt durch die Polymerlösung bzw. Dispersion) beseitigt werden. Verbleibendes Lösungsmittel führt zum "Fading", d. h. Nachlassen der Batterie-Effizienz und mangelnder Zyklenstabilität, das organische Lösungsmittel muß aus Kostengründen und zum Umweltschutz entfernt werden, das bedeutet hohe Trocknungstemperaturen bzw. beim kontinuierlichen Prozeß längere Trocknungszeiten bei niederen Trocknungstemperaturen und Vakuum, analoges gilt für die Abtrennung von Wasser: Nachteile entstehen im Film: Inhomogenitäten, Rißbildung beim engen Wickeln, verminderte Haftung auf den Stromkollektoren, Schädigung der Stromkollektoren, Unterwanderung des Films durch den Elektrolyten, u. ä. Bei der Befüllung mit dem Elektrolyten erfolgt nur mangelnde Benetzung der Anoden- bzw. Kathodenmasse.

Beim Prozeß 1b ist die Porosität zur Aufnahme des Elektrolyten gegeben, jedoch gelten alle anderen bei 1 -1a genannten Nachteile auch für 1b.

Bei dem Extruderprozeß wird u. a. Polyethylenoxid (PEO) verwendet (US-Patent Nr. 4,818,643), das jedoch beim Batteriebetrieb keine Langzeitstabilität aufweist, d. h. Zyklenstabilität < 100. Der andere Extruderprozeß arbeitet mit Elektrolyten auf Basis von EC/γ-BL (d. h. Ethylencarbonat, γ-Butyrolacton) mit LiClO₄ als Leitsalz, auch dieses System zeigt geringe Zyklenstabilität < 100 (siehe z.B. DE 100 20 031 A1), da unter den Betriebsbedingungen der Batterie das γ-BL reagiert und störende Nebenprodukte liefert: Auch das beanspruchte Polymer PMM (Polymethylacrylat) ist nicht stabil und führt zu störenden Nebenreaktionen.

DE 101 18 639 A1, 100 20 031 A1 und US-Buch "The 19th International Seminar & Exhibit on Primary Secondary Batteries", March 11-14, 2002 offenbaren jeweils Verfahren nach dem Oberbegriff von Anspruch 1.

Der Erfindung liegt somit die Aufgabe zugrunde, ein Verfahren zur Herstellung eines Lithium-Polymer-Energiespeichers und mit diesem Verfahren hergestellte Lithium-Polymer-Energiespeicher bereitzustellen, mit dem die vorstehenden Probleme gelöst werden, insbesondere kein Fading zu beobachten ist und der Energiespeicher erhöhte Zyklenstabilität aufweist.

Diese Aufgabe wird mit dem erfindungsgemäßen Verfahren gemäß Patentansprüchen 1 und 34 gelöst. Bevorzugte Ausführungsformen sind in den Unteransprüchen definiert.

Die vorliegende Erfindung vermeidet die Nachteile der bekannten Verfahren durch ein neues Verfahrenskonzept mit neuen Komponenten. Elektrodenmassen mit der Zwischenschicht des isolierenden Separators und der jeweiligen irreversiblen Anbindung an die Stromkollektoren mit der nachfolgenden Verkapselung und Polung zum Plus- bzw. Minus-Pol der Batterie sind ein außerordentlich komplexes System. Hier entscheidet die Anordnung und Zuordnung der Komponenten über die Qualität des Li-Polymer-Systems. Nach den bekannten Verfahren liegen die jeweiligen Komponenten der Elektrodenmassen - gegebenenfalls auch des Separators - nur nach dem Zufallsprinzip, statistisch verteilt vor.

Nach dem erfindungsgemäßen Verfahren erfolgt eine gezielte Zu-und Anordnung der Komponenten mit optimierter Wirksamkeit.

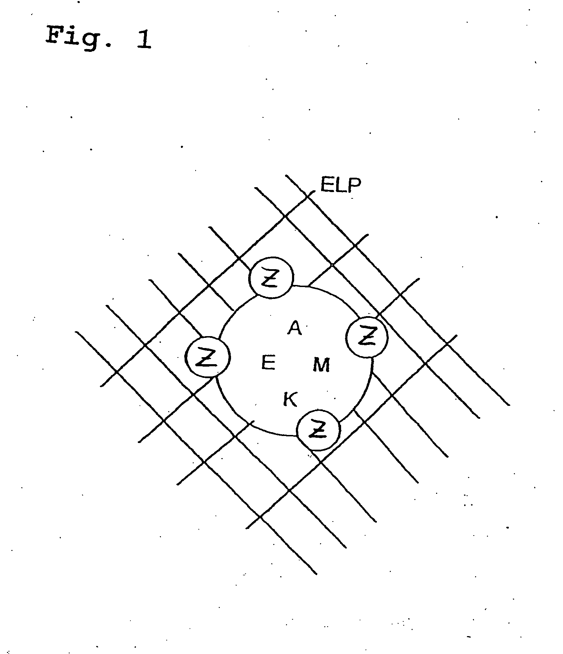

In Fig. 1 ist die gezielte Zu- und Anordnung der Komponenten für die Kathoden- bzw. Anodenmasse graphisch dargestellt. Dabei bedeutet AEKM Aktivkomponente der Elektrodenmasse, ELP die Matrix des elektrisch leitfähigen Polymers und Z sind Zusätze, z. B. Leitsalz plus Lösungsmittel (Elektrolyt und/oder anorganische Hilfsstoffe).

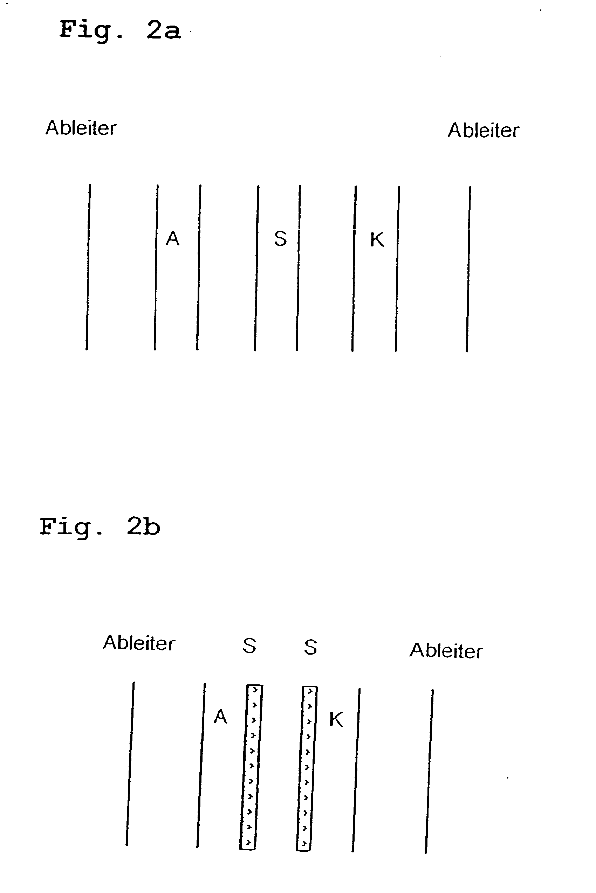

In Fig. 2a ist eine Ausführungsform des erfindungsgemäß erhaltenen Li-Polymerenergiespeichers dargestellt. Dabei ist der Separator (S) als separate Zwischenschicht in Sandwich-Lage zwischen der Anode (A) und der Kathode (K) angeordnet. Als äußerste Schichten sind die Ableiter dargestellt. Anodenseitig ist dabei ein Al-Ableiter und kathodenseitig ein Cu-Ableiter dargestellt.

Eine weitere bevorzugte Ausführungsform des Aufbaus für den erfindungsgemäß erhaltenen Li-Polymerenergiespeicher ist in Fig. 2b dargestellt. Dabei ist der Separator (S) integrierter Bestandteil der Kathode (K) bzw. der Anode (A).

Die Aktiv-Komponente der Elektrodenmasse: EM (AKEM) kann von dem System Leitsalz (LS) ± Lösungsmittel (LM) - dargestellt durch Z benetzt und durchtränkt werden und ist in ein Netz (Gewebe) aus elektrisch leitfähigem Polymerbinder (ELP) eingebettet.

Aktiv-Komponente der Elektrodenmasse:
Für die Anode:
   Gräphit natürlich, gemahlen, ungemahlen, modifiziert. Graphit synthetisch, Mesophasen, Microbeads, Graphene, Polyphenylene, Polyacetylene: allesamt C-Materialien, die mit Lithium Interkalate bilden können.
Für die Kathode:
   Ni, Co, Cr, Mo, Mn, Ti, Zr-Oxide, die mit Lithium Interkalate bilden können. Entsprechend Fig. 1 können die Aktiv-Komponenten der Elektrodenmassen mit Leitsalz (LS) und Lösungsmitteln und gegebenenfalls Leitsalzadditiven (LSA) benetzt bzw. durchtränkt werden; z. B. durch intensives Mahlen oder Rühren, gegebenenfalls bei erhöhten Temperaturen - vorzugsweise bis zu 100 °C.

Als Leitsalze LS kommen in Frage: (vgl. Dokument 1) LiPF₆, LiCF₃SO₃, Li[N(SO₂CF₃)₂), Li[C(SO₂CF₃)₃], LiOB (Li-oxalatoborat) bzw. andere Li-Organoborate u. ä. Leitsalzadditive LSA sind: Organische Salze der oben angeführten LS bei denen Li durch einen organischen Rest z. B. Imidazolyl⁺ ersetzt ist, ferner Li-acetylacetonat, Li-metaborat, Li-Silikate auch natürlich wie Spodumen, Petalit, Lepidolith, Kryolithionit, ferner Kohlenstofffasem oder -pulver, die mit Li-Salzen (LS) getränkt bzw. ummantelt sind, ferner MgO, BaO, Al₂O₃ O.ä., die als Säurefänger oder Wasseradsorber wirken.

Erfindungsgemäße Lösungsmittel sind solche die in Dokument (1) erwähnt sind, insbesondere:
Carbonate: Diethyl- (DEC), Dimethyl- (DMC), Ethylmethyl- (EMC), Ethylen- (EC), Propylen- (PC) u.ä.

Glykolether: Dimethoxyethan, DME und homologe Oxazolidinone: insbesondere niedermolekulare Verbindungen mit Molmassen bis zu 1500 und Fluoralkylmethacrylsäureester: geeignete Fluorderivate sind ungesättigte, polymerisierbare Verbindungen der allgemeinen nachstehenden Formel I:

CH₂=C (R₁)-COO-R₂ (I)

in der R₁ = H oder vorzugsweise CH₃
R₂ = Perfluoralkyle oder z.B.

2,2,3,3,4,4,4-Heptafluorbutylmethacrylatalkylether mit C2 bis C20;
2,2,3,4,4,4-Hexafluorbutylmethacrylat:
1,1,1,3,3,3-Hexafluorisopropylmethacrylat;
Perfluoroctylmethacrylat;
Trifluormethoxymethylacrylat CH=C(CH₃)-COOCH₂CH₂-O-CF₃,
ferner Monomere mit Ether- bzw. Carbonat-Resten wie Methoxymethylmethacrylat (CH₂=C(CH₃)-COOCH₂CH₂-O-CH₃) oder z.B. Hexafluoro-1,5-pentandiyldimethacrylat CH₂=C(CH₃)-COOCH₂(CF₂)₃CH₂-OOC-C(CH₃)=CH₂ und/oder Monomere wie Vinylpyridin, Vinylpyrrolidon und dergleichen.

Präparation der Aktiv-Komponente der Elektrodenmasse:
Die Verarbeitung erfolgt vorzugsweise unter Ausschluß von Luft (Sauerstoff und auch Stickstoff), als Schutzgas wird Argon bevorzugt.

Zweckmäßig werden die Aktivkomponenten im Vakuum bei Temperaturen von 0 - 200 °C, vorzugsweise von RT bis 100 °C entgast, bei Drücken von beispielsweise 20 bis 10⁻⁴ Torr, vorzugsweise bei 2 bis 10⁻² Torr, bevor sie mit LS, LSA bzw. LM kontaktiert werden.

Zur intensiven Durchmischung dienen übliche Mahl-, bzw. Mischwerkzeuge aber auch Ultraschallgeräte. (Lit. Ullmann's Encyclopedia of Industrial Chemistry, B. 2, 5-1 bis 5-38, 7-1 bis 7-36, 24-1, 25-1 bis 25-31 bis 27-16 [1988], VCH Weinheim).

Wesentliches Merkmal gemäß der Erfindung ist das Herstellen von "Batches". (Lit. H.G. Elias Makromoleküle Bd. 2, S. 332 [1992] Verlag Hüthig und Wepf, Basel). "Batches" oder "Masterbatches" sind wirkstoffkonzentrierte Polymere). Modifizierungen können durch Reaktion mit Li-Alkylen durchgeführt werden. Einzelheiten zur Darstellung der aktiven Komponenten der Elektrodenmassen (AKEM) werden in den Beispielen mitgeteilt.

### Polymerbinder:

Wie in Fig. 1 dargestellt, sind die Polymerbinder bevorzugt, Netzwerke (Gewebe) o.ä., die vorzugsweise elektrisch leitfähig sein sollten (ELP) und LS, LSA, LM inkorporiert enthalten können oder eine Ummantelung aus LS, LSA gegebenenfalls in Kombination mit LM (dem Lösungsmittel) besitzen können.

Die Polymerbinder (PB) können insbesondere Polymere mit Molmassen von 20 000 bis 2 Millionen, vorzugsweise von 30 000 bis 500 000 sein.

In Frage kommen bevorzugt Polyolefine, Polyethylen, Polypropylen, Polybutene sowie deren Copolymere, vorzugsweise mit Olefinen oder Acryl-/Methacrylsäureestern mit Alkylestergruppen mit mehr als 3 Kohlenstoffatomen, ferner Polyvinylether, sowie Polystyrol und Copolymere mit Butadien bzw. Isopren, vorzugsweise Blockcopolymere, die anionisch hergestellt werden, außerdem Kautschuk z. B. Butylkautschuk und/oder SB-Rubber bzw. Polydiene (hergestellt mit Ziegler/Natta Katalysatoren: Lit. H.G. Elias Makromoleküle Bd. 2, S. 141 [1992] Verlag Hüthig u. Wepf - Basel), ferner Fluorelastomere, vorzugsweise Co- bzw. Terpolymere auf Basis von PVDF, HFP, TFE und/oder Perfluoralkoxyderivate (Lit. Ullmann's Encyclopedia of Industrial Chemistry Vol A 11, p 402 - 427, Verlag VCH - Weinheim 1988), außerdem kommen Polyether, hergestellt aus Ethylen-, Propen-, Butenoxid als Homo- und/oder Copolymer, vorzugsweise mit verkappten Endgruppen - in Frage, auch Polyvinylpyrrolidon und Copolymere z. B. Vinylimidazol oder Methacrylsäureestern oder Vinylcaprolactam sind verwendbar.

Nach dem erfindungsgemäßen Verfahren werden die oben aufgeführten Polymerbinder (PB) als elektrisch leitfähige Polymere (ELP) in das Li-Batterie-System eingeführt und sind dort aktiv.

Die Herstellung der erfindungsgemäßen ELP kann typischerweise durch Inkorporieren oder Ummanteln mit LS, LSA und LM erfolgen. Beispielsweise wird ein PB (Styroflex^{®}: Styrol/Butadien/Styrol-Dreiblockpolymehsat) mit 20 Gew% Kohlenstofffasem (Lit. Ullmann's Encyclopedia of Industrial Chemistry Vol A 11 p 42-64) gefüllt und dann mit einer Beschichtung aus Polyvinylpyrrolidon (Luviskol)® plus LiOB/Dimethoxyethan gecoated und als Matrix für die aktive Anoden- bzw. Kathodenmasse verwendet. Analog können als PB Fluorelastomere wie Kynar 2801^{®} und/oder Dyneon THV 200^{®} verwendet werden. Diese werden z. B. mit einer Lösung aus LM: EC/PC und LS: LiPF₆ mit LSA: MgO und gegebenenfalls Carbonfasern versetzt. Andere Zusammensetzungen der Lösungsmittel, Leitsalze und Leitsalzadditive sind jederzeit möglich. Einzelheiten der Zusammensetzung und die Verfahrenstechnik der Herstellung werden in den Beispielen beschrieben.

Werden intrinsisch leitfähige Polymere wie Polyacetylen, Polypyrol, Polyanilin oder auch Carbonfasern eingesetzt, so werden diese vorzugsweise mit Leitsalz + Lösungsmittel (LiOB + DMC/DEC) getränkt und dann als Gitter, Netz o.ä. zur Fixierung der Elektrodenmassen verwendet, gegebenenfalls auch in Kombination mit den anderen z. B. oben erwähnten Polymerbindern.

Der Separator S ist eine Zwischenschicht und trennt Anode und Kathode. Der Separator ist bevorzugt eine Folie, Netzgewebe, Vlies, Gewebe o.ä., der neben dem Trenneffekt folgende Aufgaben erfüllen soll:
a) Ausreichende Leitfähigkeit für den Ionentransport der Leitsalz-Komponenten,
b) Reservoir für Leitsalz und Lösungsmittel
c) Flexibilität
d) Schmelzsicherung bei Oberlast e) Keine Versagensmechanismen bei normalem Batteriebetrieb, der definierten Be- und Entladung.

Der Separator kann als separate Zwischenschicht (Fig. 2a) verwendet werden, kann aber auch integrierter Bestandteil der Kathode bzw. Anode sein (Fig. 2b).

### Dreischichtenaufbau

Anode/Separator/Kathode werden mit ihren jeweiligen Ableitern zu einem Verbund laminiert.

Der (die) Ableiter sind vorzugsweise geprimert mit Primerschichten von 0,1 bis 10 µm; bestehend aus Polymerbinder, elektrisch leitfähigen Additiven (auf C-Basis) sowie Zusätzen wie Boraten, Silikaten, SnO, Chromaten oder dergleichen.

Gemäß Fig. 2b können insbesondere die dem Ableiter abgewandten Seiten der Anode bzw. Kathode mit einer Separatorschicht versehen sein, alternativ kann auch nur eine Elektrode (Anode oder Kathode) mit einer Separatorschicht versehen sein.

Der Separator weist bevorzugt organische Polymere (wie z.B. für den Polymerbinder PB vorstehend beschrieben) und gegebenenfalls Leitsalz, Leitsalzadditive und/oder Lösungsmittel auf. Für die erfindungsgemäße Verwendung werden poröse Strukturen bevorzugt. Die Herstellung erfolgt z.B. durch Extrusion, Gießen, Beschichten oder dergleichen.

Ableiter: Sie dienen zur Ableitung des in dem Batteriesystem erzeugten Stromes (zu Plus- bzw. Minus-Pol der Batterie); sie sollen feste Haftung mit den Elektrodenmassen haben und möglichst geringen elektrischen Übergangswiderstand zeigen.

Als Ableiter kommen Carbonfasern, Graphit, elektrisch leitfähige Polymere und/oder Metalle in Frage, vorzugsweise ist der Kathodenableiter geprimert z. B. mit Ruß/Terpolymeren Dyneon THV. Besonders bevorzugt bei den Ableitern ist das Vorliegen einer fettfreien und belagfreien Oberfläche, auf die dann der Primer bzw. die aktiven Elektrodenmassen aufgetragen werden.

Die Herstellung der Ableiter erfolgt gemäß herkömmlicher Verfahrenstechnik. Im folgenden werden einige Anoden- bzw. Kathodenmassen mitgeteilt. Einzelheiten sind aus den Beispielen ersichtlich. Die erfindungsgemäßen Systeme dienen als Energiespeicher aber auch als photovoltaische Sensoren und Dioden.

Beispielhafte Ausführungsformen für die Elektrodenmassen sind nachfolgend aufgeführt.

### Anodenmasse AM I

| | | Gew.-% |
|---|---|---|
| 1. Polymerbinder: | Kynar 2801® + Divinylbenzol | 4 + 1 |
| 2. Polyether: | Polyox WSR 301®* | 5 |
| 3. Graphit (synth.): | MCMB® | 3 |
| 4. Leitsalzadditiv: | Liacetylacetonat | 1 |
| 5. Lösungsmittel: | Ethylencarbonat EC | 5 |
| 6. Graphit (nat.): | UF80 | 65 |
| 7. Lösungsmittel: | a)Dimethoxyethan:DME | 1 |
| | b)Diethylcarbonat:DEC | 4 |
| | c)Dimethylcarbonat:DMC | 4 |
| 8. Leitsalz | Lithiumtriflat | 8 |

| | | |
|---|---|---|
| *Der Ether wurde vor der Verwendung mit Dimethylsulfat verkappt, d.h. mit -OCH₃ Endgruppe | | |

Die Komponenten 1, 3 und 4 werden bei R.T. intensiv gemischt (2 h) und dann mit 4, 5, 7a, 7b, 7c vermischt (R.T., 1 h).

Parallel wird der Graphit vorgelegt, mit dem Leitsalz 8 versetzt und ca. 30 min bei R.T. gemahlen, dann wird nacheinander der verkappte Polyether und das Lösungsmittel 7c zugesetzt und weitere 1 ½ h gerührt (R.T.). Die verwendeten Graphite 3 sowie 6 wurden vor dem Einsatz bei 10⁻² Torr und 100°C entgast und anschließend unter Argon weiterverarbeitet.

### Anodenmasse AM II

Statt Polyether 2 wird Polyvinylpyrrolidon (Luviskol®) Molmasse 100 000 verwendet.

Die Arbeiten erfolgen unter Argon, die Graphite werden im Vakuum bei 100 °C und 0,1 Torr ausgeheizt und dann bei R.T. mit n-Butyllithium (5%ig in Hexan) umgesetzt (auf 100 g Graphit 10 ml n-BuLi Lösung, anschließend erneut aufgeheizt wie oben und weiterverarbeitet.

### Anodenmasse AM III

Als Leitsalzadditiv 4 wird Li-metaborat (LiBO₂) verwendet und als Leitsalz 8 LiPF₆ + MgO (7:1) verwendet.

### Anodenmasse AM IV

Als Leitsalz 8 wird Li-oxalatoborat (LiOB) verwendet und statt Divinylbenzol wird Vinylpyrrolidon eingesetzt.

### Anodenmasse AM V

Als Leitsalz 8 wird LiPF₆, Lithiumoxalatoborat 4:4 verwendet.

### Anodenmasse AM VI

Als Graphit 6 wird Kropfmühl-Graphit gemahlen GBL® verwendet.

### Anodenmasse AM VII

Wie AM VI aber als Leitsalz 8 wird LiPF₆ + MgO (7:1) verwendet.

### Anodenmasse AM VIII

Als Polymerbinder 1 wird Dyneon THV200® verwendet.

### Anodenmasse AM IX

Als Leitsalzadditiv 4. wird Lithiumoxalatoborat verwendet.

### Anodenmasse AM X

Als Lösungsmittel 7b wird der Perfluorether (Molmasse≈500) Krytox® verwendet.

### Anodenmasse AM XI

Als Lösungsmittel 7b wird der Perfluor(propylvinylether) verwendet.

### Anodenmasse AM XII

Als Lösungsmittel 7b wird der Perfluorether FC-75® (3M) verwendet.

### (Perfluorbutyltetrahydrofuran)

Bei allen Anodenmassen liegt die AM I als Basis vor (wenn nicht auf andere Bezugsmassen verwiesen wurde).

### Anodenmasse AM XIII

Als Polymerbinder I werden 4 Gew.-% Kynar 2801, gequollen mit 1 Gew.-% Octafluorpentamethacrylat verwendet und mit 10 Gew.-% Graphit 6 UF8® versetzt und bei 50°C, 60 Min. innig vermahlen (Argon-Schutzatmosphäre), dann werden 5 Gew.-% 2. Polyox WSR 301®, der mit Methacrylsäuregruppen an den endständigen OH-Gruppen verestert wurde und 8 Gew.-% Leitsalz 8. Triflat zugefügt und erneut 60 Min. vermahlen, anschließend werden 60 Teile Graphit 6. UF8® und die Lösungsmittel 7a-7c + 5 sowie das Leitsalzadditiv 1 Gew.-% Lithiumacetylacetonat in das Mahlgut gegeben und erneut 60 Min. bei 50°C gemahlen.

Anschließend wird das Mahlgut aus einem Collinextruder bei 75-80°C aus einer Breitschlitzdüse auf eine geprimerte Cu-Folie extrudiert:Dicke 50-60µm und durch anschließendes Laminieren auf 35 bis 40 µm verdichtet.
Alle Arbeiten erfolgen unter Argon als Schutzgas, die verwendeten Graphite wurden vor der Verwendung bei 100°C, 3h bei 0,1 Torr entgast.

### Anodenmasse AM XIV

Entsprechend AM XIII, jedoch wurde statt des Polyethers 2. 5 Ges.-% eines Polybutadienöles (1,2 Vinyl 20%) Molmasse 5 bis 10 000, versetzt mit Ethylenglykoldimethacrylat (CH₂=C(CH₃)-COOCH₂-CH₂-OOC-C(CH₃)=CH₂) 1:1 eingesetzt.

### Anodenmasse XI (entspricht AM XIV)

Als Monomeres wird Ethylenglykoldialkylether verwendet.

### Anodenmasse AM XVI (entsprechend AM XIV)

Als Monomeres wird Ethylenglykolmethylethermethacrylat eingesetzt.

### Kathodenmasse KM I

| | | Gew.-% |
|---|---|---|
| 1. Li-Interkalat Metalloxid: | Co-Oxid | 70 |
| z. Polymerbinder: | Kynar 2801 | 5 |
| 3. Polymeradditiv | Polybutadienöl (Molmasse 5-8000) | 5 |
| 4. Leitsalz: | Li-triflat | 5 |
| 5. Leitsalzadditiv: | Li-acac | 2 |
| 6. Lösungsmittel: | a) DME | 1 |
| | b) EC | 6 |
| | c) DEC | 4 |
| | d) DMC | 2 |
| | | 100 |

Die Kathodenmasse KM I
wird hergestellt durch Abmischen von Li-Co-Oxid 1) mit Li-triflat 4) und Li-acac 5) dann wird die Mischung von Polymerbinder 2), Polymeradditiv 3), Monomer 3a) und den Lösungsmitteln 6.a) - 6.d), die bei Temperaturen von 30 - 80 °C hergestellt wurden, zugefügt und noch intensiv 2 h bei R.T. gemischt.

### Kathodenmasse KM II

Entspricht in der Zusammensetzung KM I, wird jedoch in anderer Reihenfolge gemischt:
Zum Li-Co-Oxid werden 60 Teile des Leitsalz 4) sowie des Lösungsmittels 6.c) zugefügt und bei R. T. 1 h innig vermischt. Dann wird die Mischung von Li-Co-Oxid (10 Teile), dem Leitsalzadditiv 5), dem Polymerbinder 2), dem Polymeradditiv 3), dem Monomer 3a) und die Lösungsmittel 6.a), 6.c), 6.d) zugefügt und bei Raumtemperatur noch 2 h intensiv gemischt.

### Kathodenmasse KM III

Als Li-interkaliertes Metalloxid 1) wird ein Gemisch Li-Ni-Oxid/Li-Co-Oxid (Gewicht 1:1) verwendet und als Monomer 3a Divinylbenzol.

### Kathodenmasse KM IV

Als Leitsalzadditiv werden 2 Gew.-% MgO eingesetzt und als Leitsalz 4) wird LiPF₆ verwendet und als Monomer 3a) Methoxymethylmethacrylat.

### Kathodenmasse KM V

Als Monomer 3a) wird Diallylcarbonat und als Polyvinylpyrrolidon (Luviskol®) verwendet.

### Kathodenmasse KM VI

Als Leitsalz 4) wird Li(trifluoromethylsulfonyl)imid Li[N(SO₂CF₃)₂] und als Leitsalzadditiv Al₂O₃ verwendet und als Monomer 3a) wird Vinylpyrrolidon eingesetzt.

### Kathodenmasse KM VII

Als Leitsalz 4) wird Li-oxalatoborat (LiOB) und als Leitsalzadditiv (S) SiO₂ Aerosil® verwendet.

### Kathodenmasse KM VIII

Als Li-interkaliertes Metalloxid 1) wird Spinell Mn-Oxid verwendet, und zwar 65 Gew.-%, das Li-Mn-Oxid wird dann mit 5 Gew.-% Ensaco-Ruß und dem Leitsalz 4) und Leitsalzadditiv 5) Li-acac sowie dem Lösungsmittel 6.b) EC versetzt und 30 min. bei R.T. in einer Kugelmühle gemahlen, anschließend wird die Mischung aus den restlichen Ansatzbestandteilen: Monomer 3a), Polymerbinder 2), Polymeradditiv 3), und den Lösungsmitteln (6.a), 6.c), 6.d)) zugefügt und 60 min. bei R. T. (40 U/Min) gemischt.

Allen Ansätzen liegt die Grundmischung KM I, wenn nicht anders angegeben, zugrunde.
Separatormassen -Separator S (Figur 2a-, 2b)

Die Separatormassen sind Schichten zwischen Anode und Kathode und bestehen aus Polymeren mit poröser Struktur, die vorzugsweise als Gewebe, Vliese, Netze, perforierte Folien oder dergleichen vorliegen und vorzugsweise eine Dicke von 1 - 50 µm, weiter bevorzugt 5 - 30 µm aufweisen. Die Materialien können organischer und anorganischer Natur sein, gegebenenfalls sind es Gemische; eine geeignete Form des Separators sind Sol-Gel-Überzüge bzw. Beschichtungen, die auf die Anoden- bzw. Kathodenmasse -auch auf beiden- aufgebracht werden und dann beim Zusammenfügen die Separatorschicht S zwischen Anode und Kathode bilden.

Eine bevorzugte Form des Separators sind extrudierte Folien in den angegebenen Dicken, die in Anoden- oder Kathodenmassen auch durch Extrusion herstellbar sind und dann durch Coextrusion zu Verbundsystemen entsprechend den Anordnungen Figur 2a/2b zusammengeführt werden (Lit. L.M: Carrier: Polymeric materials and processing, Hanser Verlag München [1990] S. 387).

Die obige Literaturstelle zeigt Anordnungen für die Coextrusion und das Zusammenführen der einzelnen Extrudate zu einem einheitlichen Verbundsystem, die für die Erfindung geeignet sind.

Bei den extrudierten Separatoren können Polymere in Fluorelastomere auf Basis von Tetrafluorethylen, Hexafluorpropen sowie Vinylidenfluorid als Bi- oder Terpolymer z.B. Kynar 2801®, Dyneon THV 120® oder dergleichen, die Polyvinylpyrrolidon, Polyether und ähnliche Polymere, die mit den Lösungsmitteln auf Basis von Alkylcarbonaten oder niedermolekularen Glykolethern gequollen sind, verwendet werden.

Der Anteil der Polymeren beträgt vorzugsweise 10-50 Gew.-%, der der Lösungsmittel vorzugsweise 20-70 Gew.-%, jeweils bezogen auf das Gesamtgewicht des Separators.

Als Leitsalze, die bevorzugt in Mengen von 10-20 Gew.-% Verwendung finden, kommen die unter den Anoden- und Kathodenmassen aufgezählten Verbindungen in Betracht.

Als Leitsalz-Additiv sind MgO, Al₂O₃, SiO₂ und Gerüstsubstanzen, wie Kaoline, Zeolithe, Serpintine sowie Vermiculit, gebläht und ungebläht, bevorzugt.

Ihr Anteil beträgt bevorzugt 10-50 Gew.-%, bezogen auf das Gesamtgewicht des Leitsalzes.

### Separator: S I

Zur Herstellung der Separatormassen nach dieser Ausführungsform werden Polymere, z.B. Kynar 2801® 30 Gew.-% + Polyvinylpyrrolidon (Molmasse 5000) 10 Gew.-% mit Ethylencarbonat 15 Gew.-%, Propylencarbonat 5 Gew.-% versetzt und in einem Voith-Mischer bei 100°C gemischt, 60 Min., anschließend wird auf R.T. abgekühlt und die Masse granuliert, dann wird dieses Granulat in einen Collin-Extruder eingetragen (Einfüllstutzen 1) und bei Temperaturen von 85-)0°C extrudiert, gleichzeitig wird eine Mischung aus 15 Gew.-% Diethylcarbonat/ 19 Gew.-% LiPF₆/ 10 Gew.-% MgO und 5 Ges.-% Vermiculith (ungebläht) unter Rühren in den 2. Einfüllstutzen des Extruders eindosiert und das Gemenge bei Verweilzeiten von ca. 2 Minuten über eine Breitschlitzdüse 15 cm breit als Folie von 30-35 µm Dicke ausgetragen und als Zwischenschicht zwischen Anode und Kathode, die mit Ableiterfolien versehen sind in einem Laminator zusammengeführt und zu einem Verbundsystem verdichtet.

### Beispiel 1

Die Anodenmasse AM II - wurde unter Schutzgas (Ar) in einem Collin-Extruder bei Temperaturen von 100 - 105 °C und gleichzeitiger Zudosierung von 8 Teilen von Trifluormethylether (F 5a® Hoechst) extrudiert und über eine Breitschlitzdüse 150 mm breit, 15 - 20 µm dick ausgetragen und direkt auf eine Cu-Folie 9 µm stark laminiert (80 °C). Das erhaltene System aus Cu-Ableiter mit Anodenmasse wurde in einem weiteren Schritt mit SI und KMII zu einem Batterieverbundsystem zusammengeführt. (kontinuierlich in einem beheiztem Laminator 80 °C).

### Beispiel 2

Die Kathodenmasse KM I wird (analog der Anodenmasse AM I im Beispiel 1) unter Argon als Schutzgas in einem Collin-Extruder bei 100 -105 °C extrudiert (150 mm breit und 20 - 25 µm dick) und direkt nach dem Austritt aus der Breitschlitzdüse auf eine geprimerte Al-Folie (Dicke: 12 µm, Primerschicht 3 µm) laminiert und mit einer Separatorfolie (Solupren®), die mit einer 1 M Lösung aus LiPF₆ in Monoglykol-bistetrafluorethylether (HC₂F₄-O-CH₂-CH₂C₂F₄H) getränkt ist, kombiniert und dann kontinuierlich mit der Anodenmasse AM XIII, die auf einer geprimerten Cu-Folie aufgetragen ist, laminiert.

### Beispiel 3

Das entsprechend (Bsp. 1 - Bsp. 2) hergestellte Verbundsystem wird zu einem Wickel verarbeitet, verkapselt und durch Laserschweißen der Elektrodenableiter zu Plus- bzw. Minus-Pol zu einer gebrauchsfähigen Batterie verarbeitet. Der Durchmesser der Batterie beträgt 8 cm, die Ladung erfolgt galvanostatisch (Digatron-Ladegerät) 1. Stufe bis ca. 3 Volt, dann bis 3,5 und zum Schluß bis 4,1 Volt, jeweils mit 0,15 mA/cm². Die Entladung erfolgt mit 0,15 mA/cm². Die Entladekapazität beträgt 43 Ah, bei einer Aktivfolie von 1,5 m². Die Zyklenstabilität liegt bei > 300, das Fading" bei ≈ 1%. Wird statt Solopur^{®}, Cellgard^{®} als Separator benutzt, so werden gleich gute Ergebnisse erzielt.

**Tabelle 1**

| Beispiel | 4 | 5 | 6 | 7 | 8 | 9 |
|---|---|---|---|---|---|---|
| Anodenmasse AM | XIV | XV | XVI | III | V | VII |
| Kathodenmasse KM | I | III | IV | V | VI | VII |
| Separator S | I | III | IV | V | VI | VII |
| Entladekapazität | 43 | 42 | 44 | 42 | 42 | 43 |
| Zyklenstabilität | >300 | >300 | >300 | >300 | >300 | >300 |
| Fading | ≈1% | ≈1% | <1% | ≈1-2% | <1% | ≈1% |

Die Verarbeitung erfolgt entsprechend der Beispiele 1 - 3 als Separator wurden die in Tabelle 2 aufgeführten Materialien benutzt. Angaben in Klammern sind Gewichtsteile.

**Tabelle 2**

| | | | | | |
|---|---|---|---|---|---|
| SII | Kynar 2801 (30) | Styroflex (2) | MgO (4) | 1MLiPF₆ in EC/DC | (64) |
| SIII | Dyneon THV 200 (32) | | MgO (8) | 1MLiPF₆ in EC/DC | (60) |
| SIV | Polypropylen (20) | Polyvinylpyrrolidon (10) | MgO (10) | 1MLiPF₆ in EC/DC | (60) |
| SV | Kynar 2801 (30) | Styroflex (2) | Li-acac (8) | 1MLiOB in DME | (60) |
| SVI | Kynar 2801 (30) | Al2O3 (5) | LiOB (5) | 1M Li-triflat in EC/DC | (60) |
| SVII | Kynar 2801 (30) | Styroflex (5) | MgO (5) | 1MLiPF₆ in EC/DC | (60) |

In den Vergleichsbeispielen wird nicht unter den erfindungsgemäßen Bedingungen gearbeitet, nämlich:
1.Entgasen der aktiven Massen.
2.Intensives Vermischen und "Reifen" (Anquellen) der LS, LSA unter Schutzgas (Argon).
3.Separates zweistufiges Mischen der Aktiv-Komponenten.

So werden Zyklenstabilitäten von 50 - 150 erreicht bei einem Fading von über 2,5 %.

## Patentansprüche

1. Verfahren zur Herstellung eines Lithium-Polymer-Energiespeichers, der aufweist eine aktive Kathodenmasse, eine aktive Anodenmasse und einen Ableiter, wobei
die aktiven Elektrodenmassen mit Leitsalz und Lösungsmittel gemahlen und/oder intensiv gemischt werden, dann
extrudiert und separat auf das Ableitermaterial zu Elektroden laminiert werden, und
die aktiven Elektrodenmassen im Anschluss an das intensive Durchmischen und vor dem Extrudieren mit Polymerbinder zu wirkstoffkonzentrierten Polymeren geformt werden.

2. Verfahren nach Anspruch 1,
**dadurch gekennzeichnet, dass**
der aktiven Elektrodenmasse ferner im Mischungsschnitt ein Leitsalz-Additiv zugegeben wird.

3. Verfahren nach einem der vorhergehenden Ansprüche,
**dadurch gekennzeichnet, dass**
die Elektroden ferner nach Extrusion und Laminierung mit Separator als Zwischenschicht in Sandwichlage zusammengefügt werden.

4. Verfahren nach einem der vorhergehenden Ansprüche,
**dadurch gekennzeichnet, dass**
die aktiven Elektrodenmassen bei Temperaturen zwischen -20 und 200 °C, vorzugsweise bei 20 bis 150 °C, insbesondere Raumtemperatur bis 100 °C entgast werden, vorzugsweise bei Drücken zwischen 10⁻¹ und 10⁻⁴ Torr.

5. Verfahren nach einem der vorhergehenden Ansprüche,
**dadurch gekennzeichnet, dass**
die Arbeiten unter Schutzgas und/oder Perfluoralkylethern durchgeführt werden.

6. Verfahren nach Anspruch 5,
**dadurch gekennzeichnet, dass**
Argon als Schutzgas eingesetzt wird.

7. Verfahren nach einem der vorhergehenden Ansprüche,
**dadurch gekennzeichnet, dass**
die aktive Elektrodenmassen für die Anode aus der Gruppe bestehend aus Li-interkalierbaren synthetischen und/oder natürlichen Graphiten, vorzugsweise solchen mit globularen und nano-dimensionierten Strukturen, Graphenen, Polyphenylenen, Polyacetylenen, Kohlenstofffasern, vorzugsweise mit poröser Struktur oder als Hohlfasern ausgewählt werden.

8. Verfahren nach Anspruch 7,
**dadurch gekennzeichnet, dass**
die aktive Anodenmasse in Mengen von 50 - 85 Gew.-% eingesetzt wird.

9. Verfahren nach einem der vorhergehenden Ansprüche,
**dadurch gekennzeichnet, dass**
die aktive Elektrodenmasse für die Kathode aus der Gruppe bestehend aus Li-interkalierbaren Oxiden von Ti, Zr, V, Cr, Mo, W, Mn, Co, Ni ausgewählt werden.

10. Verfahren nach Anspruch 9,
**dadurch gekennzeichnet, dass**
die Li-interkalierbaren Oxide in orientierter Form mit verzerrten Gitterstrukturen vorliegen.

11. Verfahren nach Anspruch 9 oder 10,
**dadurch gekennzeichnet, dass**
die aktive Kathodenmasse in Mengen von 50 - 85 Gew.-% eingesetzt wird.

12. Verfahren nach einem der vorhergehenden Ansprüche,
**dadurch gekennzeichnet, dass**
das Leitsalz aus der Gruppe bestehend aus Lithiumverbindungen wie Li-Organoborate, LiBF₄, LiClO₄, LiPF₆, Lithiumtrifluormethansulfonat, Lithiumtrifluormethylsulfonylimid, -methid, oder -bismethid ausgewählt wird.

13. Verfahren nach Anspruch 12,
**dadurch gekennzeichnet, dass**
das Leitsalz in Mengen von 10 bis 100 Gew.-%, bezogen auf die jeweiligen aktiven Elektrodenmaterialien eingesetzt wird.

14. Verfahren nach einem der vorhergehenden Ansprüche,
**dadurch gekennzeichnet, dass**
das Leitsalzadditiv aus der Gruppe bestehend aus Iminium-und/oder Imidiumsalzen der Leitsalze nach Anspruch 12, Lithiumverbindungen wie Lithiumacetylacetonat, Lithiummetaborat, Lithiumsilikat, einschließlich natürlich vorkommender Lithiumsilikate, wie Spodumen, Säurefängern und Gerüstsubstanzen wie MgO, BaO, Al₂O₃, SiO₂, sowie Kohlenstofffasern und/oder Kohlenstoffpulver, die vorzugsweise mit Lithiumsalzen getränkt oder ummantelt sind, ausgewählt wird.

15. Verfahren nach Anspruch 14,
**dadurch gekennzeichnet, dass**
das Leitsalzadditiv in Mengen von 0,1 bis 30 Gew.-%, bezogen auf die Menge des Leitsalzes, eingesetzt wird.

16. Verfahren nach einem der vorhergehenden Ansprüche,
**dadurch gekennzeichnet, dass**
das Lösungsmittel zum Lösen oder Dispergieren der Leitsalze bzw. der Leitsalz-Additive und zum Quellen der organischen Polymerbinder aus der Gruppe bestehend aus Alkylcarbonaten, Glykolethern, substituierten und/oder cyclischen Harnstoffen, Fluorethern, Fluoralkylmethacrylsäureestern und Fluorderivaten ausgewählt wird.

17. Verfahren nach Anspruch 16,
**dadurch gekennzeichnet, dass**
das Lösungsmittel zum Lösen der Leitsalze aus Fluorderivaten ausgewählt wird, die die allgemeine Formel
CH₂=C(R₁)-COO-R₂ (I)
besitzen, in der R₁ H oder vorzugsweise CH₃ ist, und
R₂ ein Perfluoralkyl oder 2,2,3,3,4,4,4-Heptafluorbutylmethacrylatalkylether mit C2 bis C20; 2,2,3,4,4,4-Hexafluorbutylmethacrylat; 1,1,1,3,3,3-Hexafluorisopropylmethacrylat; Perfluoroctylmethacrylat; Trifluormethoxymethylacrylat CH=C(CH₃)-COOCH₂CH₂-O-CF₃ umfasst.

18. Verfahren nach Anspruch 16,
**dadurch gekennzeichnet, dass**
als Lösungsmittel Fluorether mit Molmassen bis zu 1500 verwendet werden.

19. Verfahren nach Anspruch 16 oder 18,
**dadurch gekennzeichnet, dass**
das Lösungsmittel in Mengen von 1 bis 100 Gew.-%, bezogen auf das Leitsalz eingesetzt wird.

20. Verfahren nach einem der vorhergehenden Ansprüche,
**dadurch gekennzeichnet, dass**
der Polymerbinder aus der Gruppe bestehend aus Polyolefinen, Polyethylen, Polypyrrolidon, Polybutenen sowie deren Homologen und Copolymeren, Polyvinylethern, Polystyrol und dessen Copolymeren mit Butadien bzw. Isopren, anionisch hergestellten Blockpolymeren, SBR-Kautschuk, cis-Polybutadienen, Fluorelastomeren, Co- bzw. Terpolymeren auf Basis von Vinylidenfluorid, Hexafluorpropen, Tetrafluorethen, Perfluoralkoxy-Derivaten, Polyalkylenoxiden mit verkappten Endgruppen, z.B. -CH₃-OC-C(CH₃)=CH₂, cyclischen Ethern, einschliesslich Kronenethern sowie Ethern der Stärke und von Zuckern ausgewählt wird.

21. Verfahren nach Anspruch 20,
**dadurch gekennzeichnet, dass**
der Polymerbinder in Mengen von 5 bis 30 Gew.-%, bezogen auf die jeweiligen aktiven Elektrodenmassen verwendet wird.

22. Verfahren nach einem der vorhergehenden Ansprüche,
**dadurch gekennzeichnet, dass**
als Separator Folien, Netze, Gewebe, und/oder Vliese verwendet werden.

23. Verfahren nach Anspruch 22,
**dadurch gekennzeichnet, dass**
der Separator bei dem Zusammenfügen von Anode und Kathode mit dem Separator mit Leitsalz, Leitsalzadditiv und Lösungsmittel versetzt wird.

24. Verfahren nach Anspruch 22,
**dadurch gekennzeichnet, dass**
der Separator getrennt von den aktiven Elektrodenmassen extrudiert wird und zu diesem Zeitpunkt bereits Leitsalz, Leitsalzadditiv und/oder Lösungsmittel enthält und in einem nachgeschalteten Verfahrensschritt zwischen Kathode und Anode eingesetzt wird.

25. Verfahren nach Anspruch 24,
**dadurch gekennzeichnet, dass**
der Separator auf Substratfolie extrudiert wird.

26. Verfahren nach Anspruch 24,
**dadurch gekennzeichnet, dass**
die Substratfolie vor Einsetzen des Separators zwischen Kathode und Anode abgelöst wird.

27. Verfahren nach einem der vorhergehenden Ansprüche,
**dadurch gekennzeichnet, dass**
die Herstellung der Elektrodenmassen stufenweise erfolgt, indem die jeweiligen aktiven Komponenten mit anteiligen Mengen an Leitsalz und/oder Leitsalzadditiv und/oder Lösungsmittel, innig vermischt werden.

28. Verfahren nach Anspruch 27,
**dadurch gekennzeichnet, dass**
die Vermischung in einem Wirbelbett oder Ultraschallbad erfolgt.

29. Verfahren nach Anspruch 27 oder28,
**dadurch gekennzeichnet, dass**
in einem nachgeschalteten Verfahrensschritt die übrigen Elektrodenkomponenten eingearbeitet werden, vorzugsweise über Kalander oder Extruder.

30. Verfahren nach einem der Ansprüche 20 oder 21,
**dadurch gekennzeichnet, dass**
der Polymerbinder als leitfähiger Compound oder wirkstoffkonzentriertes Polymer mit Zusätzen von leitfähigem Ruß, Kohlenstofffasern, Leitsalzen, und/oder Leitsalz-Additiven eingesetzt wird.

31. Verfahren nach Anspruch 30,
**dadurch gekennzeichnet, dass**
der Polymerbinder mit dem Lösungsmittel angequollen eingesetzt wird.

32. Verfahren nach einem der vorhergehenden Ansprüche,
**dadurch gekennzeichnet, dass**
geprimerte Ableiter eingesetzt werden.

33. Verfahren nach Anspruch 32,
**dadurch gekennzeichnet, dass**
die Primerschichten eine Dicke zwischen 0,1 - 10 µm umfassen.

34. Verfahren nach einem der Ansprüche 32 oder 33,
**dadurch gekennzeichnet, dass**
die Oberfläche des Ableiters vor dem Aufbringen des Primers fettfrei und/oder belagfrei gemacht wird.

35. Verfahren nach einem der vorhergehenden Ansprüche,
**dadurch gekennzeichnet, dass**
als Ableiter Metallfolien, Kohlenstofffasergewebe, Netze, Vliese und/oder Folien von elektrisch leitfähigen Polymeren eingesetzt werden.

36. Verfahren nach Anspruch 35,
**dadurch gekennzeichnet, dass**
als Kathodenableiter geprimerte Al-Folie verwendet wird.

37. Verfahren nach einem der vorhergehenden Ansprüche,
**dadurch gekennzeichnet, dass**
nach dem Auftragen der Elektrodenmassen auf den jeweiligen Ableiter, der Verbund aus Elektrodenmasse plus Ableiter eine Trocknungszone durchläuft, in der in den Elektrodenmassen enthaltene Lösungsmittel vollständig oder partiell verdampfen und so poröse Strukturen in den aufgebrachten Elektrodenmassen entstehen.

38. Verfahren nach einem der vorhergehenden Ansprüche,
**dadurch gekennzeichnet, dass**
die Elektrodenmassen mit oder ohne Ableiter mit dem Separator zu einem Verbund laminiert werden.

39. Verfahren nach Anspruch 38,
**dadurch gekennzeichnet, dass**
das Laminieren bei Temperaturen bis 100°C erfolgt.

40. Verfahren nach einem der vorhergehenden Ansprüche,
**dadurch gekennzeichnet, dass**
das Herstellen des Lithium-Energiespeichers kontinuierlich oder diskontinuierlich erfolgt.

41. Verwendung des Verfahrens nach einem der Ansprüche 1 bis 40 zur Herstellung einer Li-Polymer-Batterie durch Schichtung und/oder Wickeln des erhaltenen Lithium-Polymer-Energiespeichers mit anschließendem Einhausen und Polen.

42. Verwendung des Verfahrens nach einem der Ansprüche 1 bis 40 zur Herstellung von elektrophoretischen Systemen, Dioden, Sensoren oder Energiespeichern.

43. Lithium-Polymer-Energiespeicher, erhältlich nach dem Verfahren gemäß einem der Ansprüche 1 bis 40.

## Claims

1. Method for producing a lithium polymer energy storage comprising an active cathode mass, an active anode mass and a current collector, wherein
the active electrode masses are milled and/or intensively mixed with conducting salt and solvent, then
extruded and separately laminated onto the current collector material to form electrodes, and
the active electrode masses are shaped to form active ingredient-concentrated polymers together with polymer binder after the intensive mixing and before extrusion.

2. Method according to claim 1, **characterized in that**
a conducting salt additive is further added to the electrode masses in the mixing step.

3. Method according to any of the preceding claims, **characterized in that**
the electrodes are further sandwiched with a separator as an intimate layer after extrusion and lamination.

4. Method according to any of the preceding claims, **characterized in that** the active electrode masses are degassed at temperatures between -20 and 200°C, preferably at 20 to 150°C, especially room temperature to 100°C, preferably at pressures between 10⁻¹ and 10⁻⁴ torr.

5. Method according to any of the preceding claims, **characterized in that**
the processes are conducted under inert gas and/or perfluor alkylethers.

6. Method according to claim 5, **characterized in that**
argon is used as an inert gas.

7. Method according to any of the proceeding claims, **characterized in that**
the active electrode masses for the anode are selected from the group consisting of Li-intercalation synthetic and/or natural graphites, preferably such having globular and nano-dimension structures, graphenes, polyphenylenes, polyacetylenes, carbon fibers, preferably having a porous structure or hollow fibers.

8. Method according to claim 7, **characterized in that** the active anode mass is employed in amounts of 50 - 85 weight%.

9. Method according to any of the preceding claims, **characterized in that**
the active electrode mass for the cathode is selected from the group consisting of Li-intercalation oxides of Ti, Zr, V, Cr, Mo, W, Mn, Co, Ni.

10. Method according to claim 9, **characterized in that**
the Li-intercalation oxide is in an oriented form having distorted lattice structures.

11. Method according to claim 9 or 10, **characterized in that**
the active cathode mass is employed in amounts of 50 - 85 weight%.

12. Method according to any of the preceding claims, **characterized in that**
the conducting salt is selected from the group consisting of lithium compounds like Li-organoborate, LiBF₄, LiClO₄, LiPF₆, lithium trifluoromethanesulfonat, lithium trifluoromethylsulfonyl imide, methide or bismethide.

13. Method according to claim 12, **characterized in that**
the conducting salt is employed in amounts of 10 to 100 weight% based on the respective active electrode materials.

14. Method according to any of the proceeding claims, **characterized in that**
the conducting salt additive is selected from the group consisting of iminium and/or imidiumsalts of the conducting salts according to claim 12, lithium compounds like lithium acetyl acetonate, lithium metaborate, lithium silicate, including naturally abandoned lithium silicates such as spodumene, acids scavengers and matrix substances like MgO, BaO, Al₂O₃, SiO₂, as well as carbon fibers and/or carbon powder, preferably impregnated or covered with lithium salts.

15. Method according to claim 14, **characterized in that**
the conducting salt additive is employed in amounts of 0,1 to 30 weight% based on the amount of the conducting salt.

16. Method according to any of the preceding claims, **characterized in that**
the solvent for dissolving or dispersing the conducting salt and the conducting salt additive, respectively, and for swelling the organic polymer binders is selected from the group consisting of alkyl carbonates, glycole ethers, substituted and/or cyclic urea derivatives, fluoroethers, fluoro alkyl methacrylic esters and fluoro derivatives.

17. Method according to claim 16, **characterized in that**
the solvent for dissolving the conducting salts is selected from fluoro derivatives having the general formula
CH₂=C(R₁)-COO-R₂ (I)
in which R₁ is H or preferably CH₃, and
R₂ comprises a perfluoro alkyl or 2,2,3,3,4,4,4-heptafluoro butylmethacrylate alkyl ether of C2 to C20; 2,2,3,4,4,4-hexafluoro isopropylmethacrylate; 1,1,1,3,3,3-hexafluore isopropylmethacrylate; perfluoro octylmethacrylate; trifluoro methoxymethylacrylate CH=C(CH₃)-COOCH₂CH₂-O-CF₃.

18. Method according to claim 16, **characterized in that** fluoro ethers having molar masses of up to 1500 are used as solvents.

19. Method according to claim 16 or claim 18, **characterized in that**
the solvent is employed in amounts of 1 to 100 weight% based on the conducting salt.

20. Method according to any of the preceding claims, **characterized in that**
the polymer binder is selected from the group consisting of polyolefines, polyethylene, polypyrrolidone, polybutenes as well as there homologues and copolymers, polyvinylethers, polystyrolene and its copolymers with butadiene and isoprene, respectively, anionic polymerized blockpolymers, SBR-rubber, cis-polybutadienes, fluoro elastomeres, copolymers and terpolymers, respectively, based on vinylidenfluoride, hexafluoropropene, tetrafluoroethene, perfluoroalkoxy derivatives, polyalkylene oxides having capped and groups, such as -CH₃-OC-C(CH₃)=CH₂, cyclic ethers, including crown ethers as well as ethers of starch and of sugars.

21. Method according to claim 20, **characterized in that**
the polymer binder is employed in amounts 5 to 30 weight% based on the restrictive active electrode masses.

22. Method according to any of the preceding claims, **characterized in that**
foils, nets, woven and/or nonwoven are employed as separator.

23. Method according to claim 22, **characterized in that**
conducting salt, conducting salt additive and solvent are added to the separator when assembling the anode and the cathode with the separator.

24. Method according to claim 22, **characterized in that**
the separator is extruded separately from the active electrode masses and already contains conducting salts, conducting salt additive and/or solvent at this point of time, and is interposed between cathode and anode in a subsequent procedural step.

25. Method according to claim 24, **characterized in that**
the separator is extruded on a substrate sheet.

26. Method according to claim 24, **characterized in that**
the substrate sheet is removed before interposing the separator between cathode and anode.

27. Method according to any of the preceding claims, **characterized in that**
the production of the electrode masses is a stepwise process, in which the respective active components are intensely mixed with the respective amounts of conducting salt and/or conducting salt additive and/or solvent.

28. Method according to claim 27, **characterized in that** the mixing is conducted in a fluid bed or ultra sonic bath.

29. Method according to claim 27 or 28, **characterized in that**
the remaining electrode components are added in a subsequent method step, preferably using a calendar or an extruder.

30. Method according to any of the claims 20 or 21, **characterized in that**
the polymer binder is employed as a conductive compound or a active material concentrated polymer having additives of conductive carbon black, carbon fibers, conducting salts, and/or conducting salt additives.

31. Method according to claim 30, **characterized in that**
the polymer binder is employed when initially swollen with the solvent.

32. Method according to any of the proceeding claims, **characterized in that**
primate current collectors are employed.

33. Method according to claim 32, **characterized in that**
the primer layers comprise a thickness of 0,1 - 10 µm.

34. Method according to any of the claims 32 or 33, **characterized in that**
the surface of the current collector is processed to be free of fat and/or free of facing before applying the primer.

35. Method according to any of the proceeding claims, **characterized in that**
metal sheets, carbon fiber cloth, nets, nonwoven and/or foils of electrically conductive polymers are employed as current collector.

36. Method according to claim 35, **characterized in that** a primered Al-foil is employed as a cathode current collector.

37. Method according to any of the proceeding claims, **characterized in that**
the assembly of electrode mass plus current collector runs to a drying zone in which solvents contained in the electrode masses are completely or partially evaporated and thereby porous structures are generated in the applied electrode masses, after the electrode masses have been applied to the respective current collector.

38. Method according to any of the proceeding claims, **characterized in that**
the electrode masses are laminated with the separator to form an assembly with or without the current collector.

39. Method according to claim 38, **characterized in that**
the lamination is carried out at temperatures up to 100° C.

40. Method according to any of the preceding claims, **characterized in that**
the production of the lithium energy storage is carried out continuously or discontinuously.

41. Use of the method according to any of the claims 1 to 40 for producing a Li-polymer-battery by stacking and/or winding of the resulting lithium polymer energy storage and a subsequent housing and poling.

42. Use of the method according to any of the claims 1 to 40 for producing electro phoretic systems, diodes, sensors or energy storages.

43. Lithium polymer energy storage obtainable by a process according to any of the claims 1 to 40.

## Revendications

1. Accumulateur d'énergie lithium - polymère comprenant une matière cathodique active, une matière anodique active et un parafoudre, dans lequel
les matières d'électrodes actives sont broyées et/ou mélangées de manière intensive avec un sel conducteur et un solvant, puis
extrudées et stratifiées séparément sur la matière du parafoudre en électrodes, et
les matières d'électrodes actives sont façonnées à la suite du mixage intensif et avant l'extrusion avec des liants polymériques pour donner des polymères concentrés en principes actifs.

2. Procédé selon la revendication 1, **caractérisé en ce qu'**un additif de sel conducteur est ajouté à la matière d'électrode active en plus en coupe de mélange.

3. Procédé selon l'une des revendications précédentes, **caractérisé en ce que** les électrodes, après l'extrusion et la stratification, sont en plus assemblées en une disposition sandwich avec un séparateur comme couche intermédiaire.

4. Procédé selon l'unes des revendications précédentes, **caractérisé en ce que** les matières d'électrodes actives sont dégazées à des températures situées entre -20 et 200 °C, de préférence de 20 à 150 °C, en particulier de la température ambiante jusqu'à 100 °C, de préférence à des pressions situées entre 10⁻¹ et 10⁻⁴ torrs.

5. Procédé selon l'unes des revendications précédentes, **caractérisé en ce que** les travaux sont réalisés sous gaz protecteur et/ou sous perfluoroalkyléthers.

6. Procédé selon la revendication 5, **caractérisé en ce que** l'on met en oeuvre de l'argon comme gaz protecteur.

7. Procédé selon l'unes des revendications précédentes, **caractérisé en ce que** les matières d'électrodes actives sont choisies pour l'anode dans le groupe constitué par les graphites naturelles et/ou synthétiques pouvant comprendre des intercalations de Li, de préférence celles ayant des structures globulaires et nano-dimensionnées, des graphènes, des polyphénylènes, des polyacétylènes, des fibres de carbone, de préférence ayant une structure poreuse ou sous forme de fibres creuses.

8. Procédé selon la revendication 7, **caractérisé en ce que** la matière anodique active est mise en oeuvre en des quantités de 50 à 85 % en poids.

9. Procédé selon l'unes des revendications précédentes, **caractérisé en ce que** les matières d'électrodes actives sont choisies pour la cathode dans le groupe constitué par les oxydes de Ti, Zr, V, Cr, Mo, W, Mn, Co, Ni, pouvant comprendre des intercalations de Li.

10. Procédé selon la revendication 9, **caractérisé en ce que** les oxydes pouvant comprendre des intercalations de Li se présentent sous une forme orientée avec des structures en grille déformées.

11. Procédé selon la revendication 9 ou 10, **caractérisé en ce que** la matière cathodique active est mise en oeuvre en des quantités de 50 à 85 % en poids.

12. Procédé selon l'unes des revendications précédentes, **caractérisé en ce que** le sel conducteur est choisi dans le groupe constitué par les composés de lithium tels que les organoborates de Li, LiBF₄, LiClO₄, LiPF₆, le trifluorométhanesulfonate de lithium, le trifluorométhylsulfonylimide de lithium, trifluorométhylsulfonyl-méthide ou -bisméthide de lithium.

13. Procédé selon la revendication 12, **caractérisé en ce que** le sel conducteur est mis en oeuvre en des quantités de 10 à 100 % en poids, par rapport aux matières d'électrodes actives respectives.

14. Procédé selon l'unes des revendications précédentes, **caractérisé en ce que** l'additif de sel conducteur est choisi dans le groupe constitué par les sels d'iminium et/ou d'imidium des sels conducteurs selon la revendication 12, les composés de lithium, comme l'acétylacétonate de lithium, le tétraborate de lithium, le silicate de lithium, y compris les silicates de lithium naturels, comme le spodumène, les capteurs d'acide et les substances squelettes tels que MgO, BaO, Al₂O₃, SiO₂, ainsi que les fibres de carbone et/ou les poudres de carbone, qui sont de préférence imbibées ou gainées de sels de lithium.

15. Procédé selon la revendication 14, **caractérisé en ce que** l'additif de sel conducteur est mis en oeuvre en des quantités de 0,1 à 30 % en poids, par rapport à la quantité de sel conducteur.

16. Procédé selon l'unes des revendications précédentes, **caractérisé en ce que** le solvant pour dissoudre ou disperser les sels conducteurs ou les additifs de sel conducteur et pour gonfler les liants polymériques organiques est choisi dans le groupe constitué par les alkylcarbonates, les éthers de glycol, les urées substituées et/ou cycliques, les fluoroéthers, les esters d'acide fluoroalkylméthacryliques et les dérivés de fluor.

17. Procédé selon la revendication 16, **caractérisé en ce que** le solvant pour dissoudre les sels conducteurs est choisi parmi les dérivés de fluor, qui possèdent la formule générale
CH₂=C(R₁) -COO-R₂ (I)
dans laquelle R₁ est H ou de préférence CH₃, et
R₂ est un perfluoroalkyle ou
l'alkyléther de 2,2,3,3,4,4,4-heptafluorobutylméthacrylate en C₂ à C₂₀ ; le 2,2,3,4,4,4-hexafluorobutylméthacrylate ; le 1,1,1,3,3,3-hexafluoroisopropylméthacrylate ; le perfluorooctylméthacrylate ; le trifluorométhoxyméthylacrylate CH-C(CH₃) -COOCH₂CH₂-O-CF₃.

18. Procédé selon la revendication 16, **caractérisé en ce que** l'on utilise des fluoroéthers ayant des masses molaires allant jusqu'à 1500 comme solvants.

19. Procédé selon la revendication 16 ou 18, **caractérisé en ce que** le solvant est mis en oeuvre en des quantités allant de 1 à 100 % en poids, par rapport au sel conducteur.

20. Procédé selon l'une des revendications précédentes, **caractérisé en ce que** le liant polymère est choisi dans le groupe constitué par les polyoléfines, le polyéthylène, la polypyrrolidone, les polybutènes, et leurs homologues et copolymères, les polyéthers de vinyle, le polystyrène et ses copolymères avec le butadiène ou l'isoprène, les polymères à blocs fabriqués anioniquement, le caoutchouc SBR, les cis-polybutadiènes, les fluoroélastomères, les co- ou terpolymères à base de fluorure de vinylidène, l'hexafluoropropène, le tétrafluoroéthène, les dérivés perfluoroalcoxy, les polyoxydes d'alkylène avec des groupes terminaux coiffés, par exemple -CH₃-OC-C(CH₃)=CH₂, les éthers cycliques, y compris les éthers couronnes ainsi que les éthers d'amidons et de sucres.

21. Procédé selon la revendication 20, **caractérisé en ce que** le liant polymère est utilisé en des quantités de 5 à 30 % en poids, par rapport aux masses d'électrodes actives respectives.

22. Procédé selon l'une des revendications précédentes, **caractérisé en ce que** l'on utilise comme séparateur des feuilles, des filets, des toiles et/ou des voiles.

23. Procédé selon la revendication 22, **caractérisé en ce que** le séparateur est mélangé au sel conducteur, additif de sel conducteur et solvant lors du montage de l'anode et de la cathode avec le séparateur.

24. Procédé selon la revendication 22, **caractérisé en ce que** le séparateur est extrudé séparément des masses d'électrodes actives et contient déjà à ce moment là le sel conducteur, l'additif de sel conducteur et/ou le solvant et est mis en place dans une étape de procédé post-posée entre la cathode et l'anode.

25. Procédé selon la revendication 24, **caractérisé en ce que** le séparateur est extrudé sur la feuille de substrat.

26. Procédé selon la revendication 24, **caractérisé en ce que** la feuille de substrat est détachée avant la mise en place du séparateur entre la cathode et l'anode.

27. Procédé selon l'une des revendications précédentes, **caractérisé en ce que** la fabrication des masses d'électrodes se fait étapes par étapes, en mélangeant intimement les composants actifs respectifs avec les quantités proportionnelles de sel conducteur et/ou d'additif de sel conducteur et/ou de solvant.

28. Procédé selon la revendication 27, **caractérisé en ce que** le mélange se fait dans un lit fluidisé ou dans un bain d'ultrasons.

29. Procédé selon la revendication 27 ou 28, **caractérisé en ce que** les autres composants des électrodes sont incorporés dans une étape de procédé post-posée, de préférence par le biais d'une calandreuse ou d'une extrudeuse.

30. Procédé selon l'une des revendications 20 ou 21, **caractérisé en ce que** le liant polymère est mis en oeuvre à titre de compound conducteur ou de polymère concentré en principes actifs avec des additions de suie conductrice, de fibres de carbone, de sels conducteurs et/ou d'additifs de sels conducteurs.

31. Procédé selon la revendication 30, **caractérisé en ce que** le liant polymère est mis en oeuvre gonflé avec le solvant.

32. Procédé selon l'une des revendications précédentes, **caractérisé en ce que** des parafoudres apprêtés sont mis en oeuvre.

33. Procédé selon la revendication 32, **caractérisé en ce que** les couches d'apprêt ont une épaisseur située entre 0,1 et 10 µm.

34. Procédé selon l'une des revendications 32 ou 33, **caractérisé en ce que** la surface du parafoudre est dégraissée et/ou débarrassée des dépôts avant l'application de l'apprêt.

35. Procédé selon l'une des revendications précédentes, **caractérisé en ce que** l'on met en oeuvre comme parafoudres des feuilles métalliques, des toiles en fibres de carbone, des filets, des voiles et/ou des feuilles de polymères électriquement conducteurs.

36. Procédé selon la revendication 35, **caractérisé en ce que** l'on utilise comme parafoudre de cathode une feuille de Al apprêtée.

37. Procédé selon l'une des revendications précédentes, **caractérisé en ce que**, après l'application des masses d'électrodes sur le parafoudre respectif, le composite constitué de la masse d'électrodes et du parafoudre traverse une zone de séchage dans laquelle les solvants contenus dans les masses d'électrodes s'évaporent totalement ou partiellement et les structures ainsi poreuses naissent dans les masses d'électrodes déposées.

38. Procédé selon l'une des revendications précédentes, **caractérisé en ce que** les masses d'électrodes sont stratifiées avec ou sans parafoudre avec le séparateur pour donner un composite.

39. Procédé selon la revendication 38, **caractérisé en ce que** la stratification se fait à des températures allant jusqu'à 100 °C.

40. Procédé selon l'une des revendications précédentes, **caractérisé en ce que** la fabrication de l'accumulateur d'énergie au lithium se fait en continu ou en discontinu.

41. Utilisation du procédé selon l'une des revendications 1 à 40 pour la production d'une batterie Li-polymère par couchage et/ou enroulement de l'accumulateur d'énergie lithium - polymère obtenu avec inclusion consécutive dans un boîtier et raccordement aux pôles.

42. Utilisation du procédé selon l'une des revendications 1 à 40 pour la fabrication de systèmes électrophorétiques, de diodes, de capteurs ou d'accumulateurs d'énergie.

43. Accumulateur d'énergie lithium - polymère, pouvant être obtenu selon le procédé d'après l'une des revendications 1 à 40.
